# EUROPEAN PATENT APPLICATION

(11) **EP 4 656 694 A1**
(43) Date of publication of application: **03.12.2025**
(21) Application number: 24910110.6
(22) Date of filing: 30.09.2024
(51) Int. Cl.: C09D 11/52, C09D 11/033

(54) **ELECTRON TRANSPORT TYPE CONDUCTIVE INK CONTAINING BENZODIFURANONE SUBSTANCE**

(30) Priority: 25.12.2023 CN 202311799887
(71) Applicant: South China University of Technology, Guangzhou, Guangdong 510630 (CN)
(72) Inventor: HUANG, Fei, Guangzhou, Guangdong 510630 (CN); TANG, Haoran, Guangzhou, Guangdong 510630 (CN)
(74) Representative: Cueto, Sénida
(86) International application number: PCT/CN2024/122843
(87) International publication number: WO 2025/139168

(57) **Abstract**

Disclosed are an electron-transport conductive ink containing a benzodifurandione-based compound, a preparation method therefore, and application thereof. The conductive ink comprises a benzodifurandione-based compound, a specific surfactant, and a solvent;
the benzodifurandione-based compound has the following structural unit:

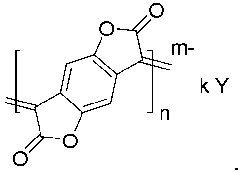

The present disclosure introduces a specific surfactant capable of interacting with the benzodifurandione-based compound, which is usually a unit capable of forming a hydrogen bond or ionic electrostatic force with the benzodifurandione-based compound, such that, in addition to the dispersion ability of the surfactant, the force makes the benzodifurandione-based compound more stable after dispersion, preventing aggregation over time and ensuring better dispersion stability.

## Description

### TECHNICAL FIELD

The present disclosure belongs to the field of conductive polymer materials, and particularly relates to an electron-transport conductive ink containing a benzodifurandione-based compound, a preparation method therefor, and application thereof.

### BACKGROUND

Conductive polymers usually refer to polymers with a conjugated structure in which single and double bonds alternate in a main chain, which enables charge carriers to move in the main chain, and imparts semiconductor and conductive properties to a material, thus pioneering the field of organic electronics. Compared with inorganic semiconductor materials or metals, conductive polymers generally have outstanding advantages in processability, light weight, flexibility, and easy tuning of properties through selective chemical structure modification, and the like. Since the conductive polyacetylene was reported, conductive polymers have developed rapidly. Currently, a variety of conductive polymers, including polyaniline, polythiophene, polypyrrole, and poly(3,4-ethylenedioxythiophene) (PEDOT), have emerged and widely used in the fields of antistatic coatings, display screens, and capacitors. However, the conductive polymers that have been commercialized usually have positively charged main chains, and are mainly used for transporting cationic charge carriers, that is, p-type conductive polymers. In contrast, n-type conductive polymers, which have negatively charged main chains and are used for transporting anionic charge carriers, have lagged in development. A lack of n-type conductive polymers capable of matching p-type materials has severely hindered the development of organic integrated circuits, which requires a combination of high-performance p-type and n-type materials.

In addition, the ability to fabricate large-area devices at low cost is a key advantage of organic conductive polymers. However, organic conductive polymers are usually hard to dissolve, as they carry charges and have strong electrostatic interaction between materials. Taking the conductive polyacetylene as an example, although its conductivity can reach a level comparable to that of some metals, it is difficult to be processed due to its insoluble and non-melting properties, limiting its practical use. At present, for the p-type conductive polymers, polyanionic surfactants are usually used to combine with the positively charged main chain to achieving dispersion effect. For example, the combination of polystyrene sulfonic acid (PSS) with PEDOT is PEDOT : PSS, which can form a dispersion in water and plays a particularly important role in industry. However, for the n-type conductive polymers, a method of modifying polymer main chain with alkyl chains is usually adopted at present. The method increases the preparation steps and costs of the polymer, which is not conducive to industrial production.

Moreover, the n-type conductive polymers reported so far are all processed using toxic/carcinogenic organic solvents such as chloroform and chlorobenzene, which cause damage to the workers' health and environment when being used on a large scale. Recently, the literature (A Solution-Processed N-type Conducting Polymer with Ultrahigh Conductivity. Nature, 2022, 611, 271.) and the patent titled N-type Conjugated Polymer, Preparation Method Therefor, and Application Thereof (Application No.: 202110679959.2) an n-type conductive polymer poly(benzodifurandione) (PBFDO) and a preparation method therefore. The literature (Highly Conductive, and Solution-Processable N-Doped Transparent Organic Conductor. J. Am. Chem. Soc. 2023, 145, 3706) reports the use of poly(benzoquinone-dioxane) to fabricate electrodes for electrochromic devices. However, the n-type conductive polymer is mainly processed using high-boiling-point solvents such as dimethyl sulfoxide (DMSO), N,N-dimethylacetamide (DMAc), or N,N-dimethylformamide (DMF). On one hand, film formation requires vacuum removal of solvents, making the processing steps somewhat cumbersome. On the other hand, the solvents may dissolve underlying materials when organic electronic devices are processed, causing damage. Therefore, it is necessary to adjust the solution processing properties of materials. At present, n-type conductive polymers capable of being processed with water/alcohol solutions have not yet been reported.

### SUMMARY

One objective of the present disclosure is to prepare a liquid composition of a stable and homogeneous dispersion formed by electron-transport conductive polymer particles with negative charge in a main chain and water/alcohol solution, thereby filling a gap in the existing n-type conductive polymers processable in both water and alcohol.

Specifically, the present disclosure further provides a method for adjusting the properties (Seebeck coefficient and work function) of the liquid composition containing an n-type conductive polymer poly(benzodifurandione) (PBFDO) (that is, mixing a benzodifurandione-based compound with other surfactants), and application thereof in an organic electronic device. The composition can be used to prepare a high-performance organic thermoelectric material and an electron transport layer in the organic solar cell device. Compared with the prior art, the performance of the devices is greatly improved, and it is more conducive to the preparation of a large-area device.

The present disclosure provides an electron-transport conductive ink containing a benzodifurandione-based compound, which includes a benzodifurandione-based compound, a specific surfactant, and a solvent;
the benzodifurandione-based compound has the following structural unit: 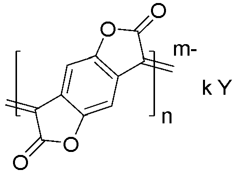
where m, n and k are positive integers;
Y is a counterion in the n-type conjugated polymer or in the n-type conjugated polymer structure, and the counterion is selected from one of an organic cation or an inorganic cation;
the specific surfactant is selected from an anionic surfactant, a cationic surfactant, a nonionic surfactants, or an amphoteric surfactant; and the solvent is selected from one or more of a water solvent and an alcohol solvent.

Preferably, the solvent is selected from one or more of methanol, ethanol, isopropanol, n-butanol, ethylene glycol monomethyl ether, and ethylene glycol. More preferably, the alcohol solvent is one or more of ethanol, isopropanol, and ethylene glycol monomethyl ether.

Further, the electron-transport conductive ink containing a benzodifurandione-based compound includes the following components by mass fraction:

| | |
|---|---|
| a benzodifurandione-based compound | 0.2-1 wt% |
| a specific surfactant | 1-6 wt% |
| a solvent | balance. |

Further, the specific surfactant is selected from surfactants capable of forming a hydrogen bond with the benzodifurandione-based compound.

Further, the specific surfactant is a polymer.

Further, a structure of the specific surfactant has one or more of an ether group, an amide group, an ester group, or a carbonyl group.

The present disclosure introduces a specific surfactant capable of interacting with the benzodifurandione-based compound, which is usually a unit capable of forming a hydrogen bond or ionic electrostatic force with the benzodifurandione-based compound, such that, in addition to the dispersion ability of the surfactant, the force makes the benzodifurandione-based compound more stable after dispersion, preventing aggregation over time and ensuring better dispersion stability.

Specifically, the present disclosure introduces a specific surfactant containing an ether bond or an ester group during the polymerization of the n-type conductive polymer PBFDO, which can form a hydrogen bond or ionic electrostatic force with the PBFDO, such that a composite particle is formed and a stable n-type conductive ink processable in both water and alcohol is formed through solvent replacement during dialysis.

Further, the specific surfactant is selected from one or more of a polyether derivative, a polylactic acid derivative, a polyacrylic acid derivative, a polyacrylamide derivative, a polyamide derivative, an imidazole-based polymer derivative, a thiazole-based polymer derivative, an oxazole-based polymer derivative, and any binary or multi-polymer of any of the above optional objects or a derivative thereof.

In the present disclosure, the dispersiibility of the electron-transport conductive ink containing a benzodifurandione-based compound depends on strength of the interaction between the surfactant and the benzodifurandione-based compound. Specifically, it is related to a density of the hydrogen bond or the ionic electrostatic interaction unit. Therefore, the specific surfactant of the present disclosure is preferably a polymer structure with more repeating units, which can form strong interaction with the benzodifurandione-based compound. In contrast, a small molecule surfactant has minimal effect or no such effect.

The specific surfactant includes, but is not limited to: polylactic acid, poly(lactic acid-co-glycolic acid) (PLGA), poly(N-isopropyl acrylamide), poly(N,N-diethyl acrylamide), poly(N-vinyl caprolactam), poly(2-ethyl-2-oxazoline), and the like.

Further, the electron-transport conductive ink containing a benzodifurandione-based compound is composed of a solid composition and a liquid composition; the solid composition accounts for 0.1-20 wt% of the electron-transport conductive ink containing a benzodifurandione-based compound.

Preferably, the solid composition accounts for 1-10 wt% of the electron-transport conductive ink containing a benzodifurandione-based compound, and more preferably 1.5-3 wt%.

Further, a mass ratio of the benzodifurandione-based compound to the specific surfactant is 1:1 - 1:10.

Further, a particle size of the solid is 20-2000 nm. Preferably, the particle size is controlled at 40-200 nm.

By adjusting a proportion of the specific surfactant (that is., changing the mass ratio of the conductive polymer to specific surfactant in the composite particles), a particle size of n-type conductive polymer ion in the liquid composition can be adjusted.

Further, the liquid composition includes one or more of a UV stabilizer, a crosslinking agent, a work function modifier, a preservative, a thickener, and a co-solvent; and the co-solvent can be selected from one or more of a nitrile solvent, an ether solvent, an ester solvent, a sulfoxide solvent, a ketone solvent, and an amide solvent.

Specifically, the UV stabilizer is selected from one or a combination of at least two of 2,2,6,6-tetramethyl-4-piperidinyl ester, phenyl salicylate, 2-(2'-hydroxy-5'-methylphenyl)benzotriazole, 2-hydroxy-4-methoxybenzophenone, 4-benzoyloxy-2,2,6,6-tetramethylpiperidine, hexamethylphosphoramide; the crosslinking agent is selected from one or one or a combination of at least two of tetraethyl orthosilicate, methacryloxypropyl double-terminated polydimethylsiloxane, and methacryloxypropyl single-terminated polydimethylsiloxane; and the work function modifier is selected from one or one or a combination of at least two of phosphorylcholine, sulfobetaine, carboxy betaine, ammonium oxide, amino acid substances and derivatives thereof.

Further, a number-average molecular weight of the specific surfactant is 10-500 kDa.

Another objective of the present disclosure is to provide a preparation method for the electron-transport conductive ink containing a benzodifurandione-based compound, and the solvent is used to replace an original polar solvent after the preparation of the benzodifurandione-based compound is completed.

Yet another objective of the present disclosure is to provide application of the electron-transport conductive ink containing a benzodifurandione-based compound in the optoelectronic field.

Based on the prepared different n-type conductive inks, the present disclosure prepares organic electronic devices using the conductive inks, demonstrating application of the conductive inks as active layers in organic thermoelectric devices and electron transport layers in organic solar cell devices. The above means demonstrate the broad application potential of the obtained electron-transport n-type conductive ink in the field of organic electronics.

Compared with the prior art, the present disclosure has the following advantages:
1) The conductive ink of the present disclosure is mainly used for transporting electrons, and exhibits air-stable n-type conductivity, which can meet the demands for of the existing organic electronic devices for electron transport and p-n integrated circuit development.
2) The conductive ink of the present disclosure can be processed using water/alcohol-based solvents, which overcomes the deficiencies that most of the existing n-type conductive polymers require toxic organic solvents. The processing conditions are simple and meet the requirements of environmentally friendly "green chemistry."

### BRIEF DESCRIPTION OF THE DRAWINGS

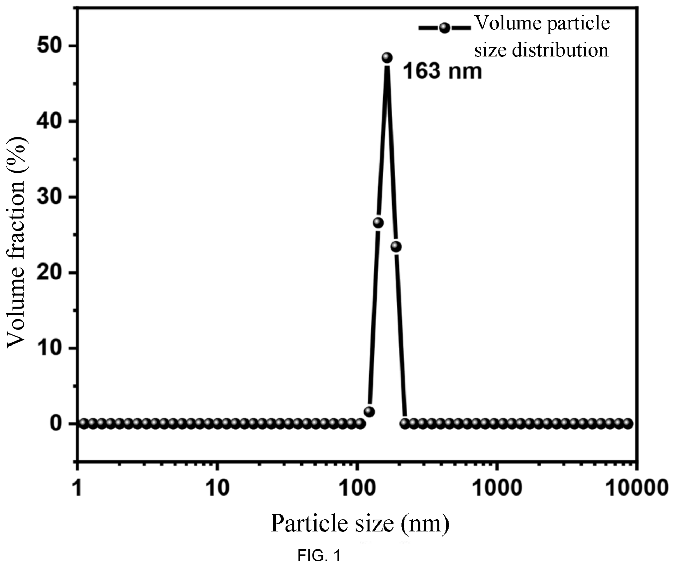

FIG. 1 is a test chart of particle size distribution of a water-dispersible electron-transport conductive ink prepared in Example 1.

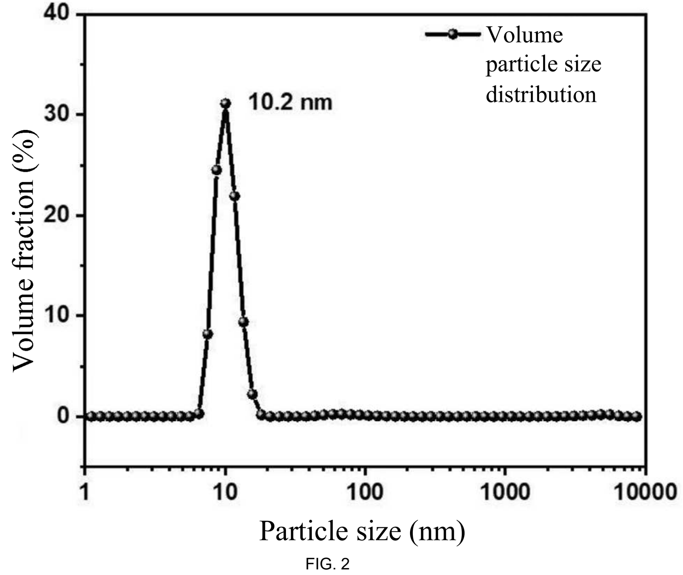

FIG. 2 is a test chart of particle size distribution of an ethanol-dispersible electron-transport conductive ink prepared in Example 2.

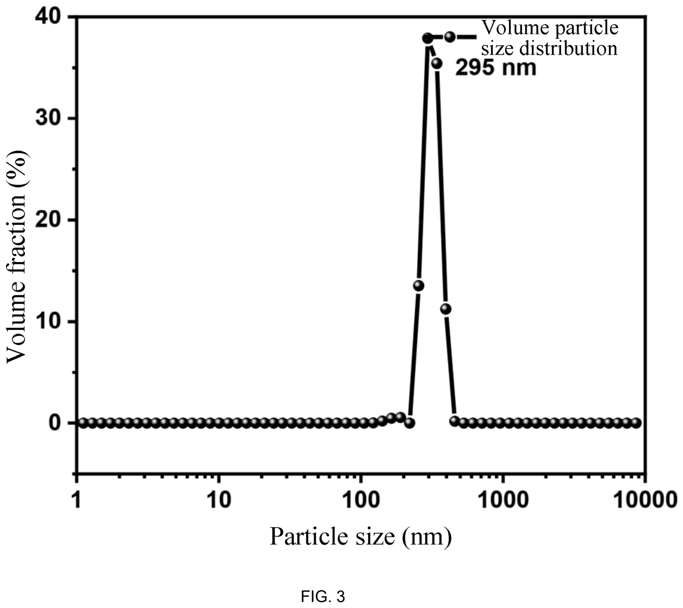

FIG. 3 is a test chart of particle size distribution of an isopropanol-dispersible electron-transport conductive ink prepared in Example 4.

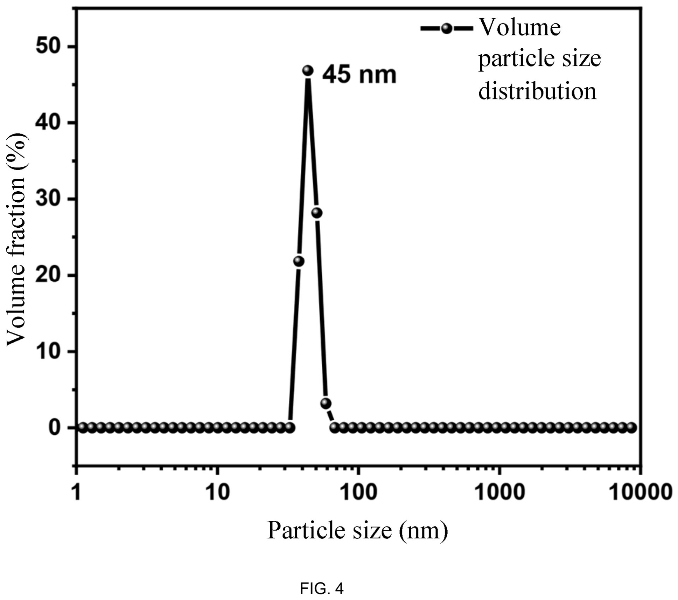

FIG. 4 is a test chart of particle size distribution of an isopropanol-dispersible electron-transport conductive ink prepared in Example 5.
FIG. 5 is a diagram showing a work function range adjustment of an isopropanol-dispersible electron-transport conductive ink achieved by adjusting an added amount of 3-(dodecyldimethylammonio)propanesulfonate in Example 6.
FIG. 6 is a schematic structural diagram of an organic solar cell device prepared in Test Example 3.
FIG. 7 is a diagram of performance of an organic solar cell device using an electron-transport conductive ink prepared according to the present disclosure as an electron transport layer in Test Example 3, where a blank (that is, without using the electron-transport conductive ink prepared according to the present disclosure) is provided as a comparative example.
FIG. 8 shows a chemical structure of an electron donor material PM6 and an electron acceptor material Y6 of an anode buffer material in Test Example 3.

### DETAILED DESCRIPTIONS OF THE EMBODIMENTS

In order to more clearly illustrate the technical solution in the present disclosure, the following embodiments are enumerated. Unless otherwise specified, raw materials, reactions and post-treatment method stated in the embodiments are all common commercially available raw materials and technical means known to those skilled in the art.

In the embodiments of the present disclosure, unless otherwise specified, the steps for preparing an organic solar cell are carried out using conventional methods well known to those skilled in the art.

### Example 1

An electron-transport conductive ink containing a benzodifurandione-based compound, which includes the following components by mass fraction:

| | |
|---|---|
| benzodifurandione-based compound | 0.75 wt% |
| polyether F127 | 5.75 wt% |
| pure water | balance. |

A preparation method for the electron-transport conductive ink containing a benzodifurandione-based compound is as follows:

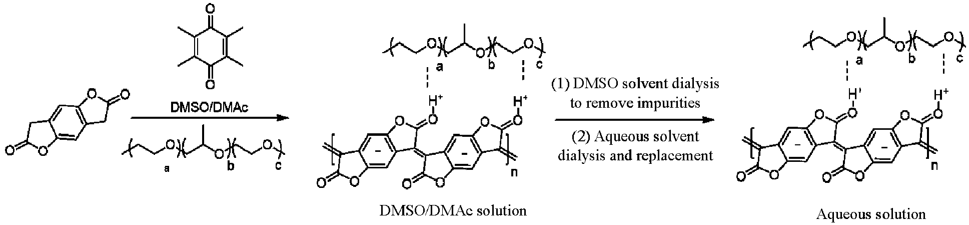

Benzo[1,2-b:4,5-b"]difuran-2,6(3H,7H)-dione (380.3 mg, 2 mmol), tetramethyl-1,4-benzoquinone (492.6 mg, 3 mmol), and polyether F127 (Mn = 10,000-30,000 Da) were dissolved in a mixed solution of dimethyl sulfoxide (DMSO) and N,N-dimethylacetamide (DMAc) at a ratio of 1 : 1 (v/v) (with a total volume of 40 mL) to obtain a solution, the solution was degassed under vacuum and purged with nitrogen for protection, and then stirred at 80°C for 4 h and cooled down to room temperature, the solution was then transferred into a pretreated dialysis bag (with a molecular weight cutoff of 10 kDa), and first dialyzed with a DMSO solution for three days, a solvent thereof was then replaced through dialysis with an aqueous solution, the solution in the dialysis bag was collected and filtered with a polyethersulfone aqueous phase filter (0.45 µm) to obtain the electron-transport conductive ink processable in an aqueous solution, and the obtained solution had a solid content of 6.5 wt%.

### Example 2

An electron-transport conductive ink containing a benzodifurandione-based compound, which includes the following components by mass fraction:

| | |
|---|---|
| benzodifurandione-based compound | 0.65 wt% |
| polyether F127 | 4.15 wt% |
| ethanol | balance. |

A preparation method for the electron-transport conductive ink containing a benzodifurandione-based compound is as follows:

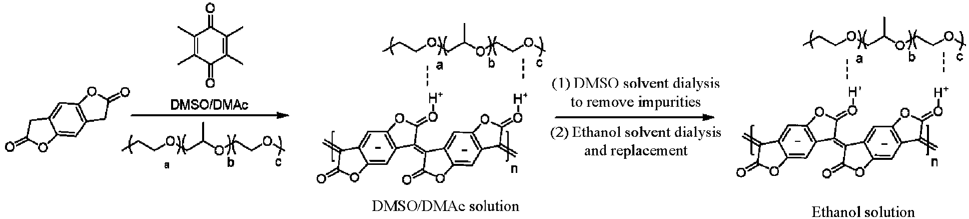

Benzo[1,2-b:4,5-b"]difuran-2,6(3H,7H)-dione (380.3 mg, 2 mmol), tetramethyl-1,4-benzoquinone (492.6 mg, 3 mmol), and polyether F127 (Mn = 10,000-30,000 Da) were dissolved in a mixed solution of dimethyl sulfoxide (DMSO) and N,N-dimethylacetamide (DMAc) at a ratio of 1 : 1 (v/v) (with a total volume of 40 mL) to obtain a solution, the solution was degassed under vacuum and purged with nitrogen for protection, and then stirred at 80°C for 4 h and cooled down to room temperature, the solution was then transferred into a pretreated dialysis bag (with a molecular weight cutoff of 10 kDa), and first dialyzed with a DMSO for three days, a solvent thereof was then replaced through dialysis with an ethanol solution, the solution in the dialysis bag was collected and filtered with a polyethersulfone aqueous phase filter (0.45 µm) to obtain the electron-transport conductive ink processable in an aqueous solution, and the obtained solution had a solid content of 4.8 wt%.

### Example 3

An electron-transport conductive ink containing a benzodifurandione-based compound, which includes the following components by mass fraction:

| | |
|---|---|
| benzodifurandione-based compound | 0.75 wt% |
| poly(lactic acid-co-glycolic acid) (PLGA) | 4.65 wt% |
| ethanol/tetrahydrofuran mixed solution (ethanol : tetrahydrofuran = 1:4, v/v) | balance. |

A preparation method for the electron-transport conductive ink containing a benzodifurandione-based compound is as follows:

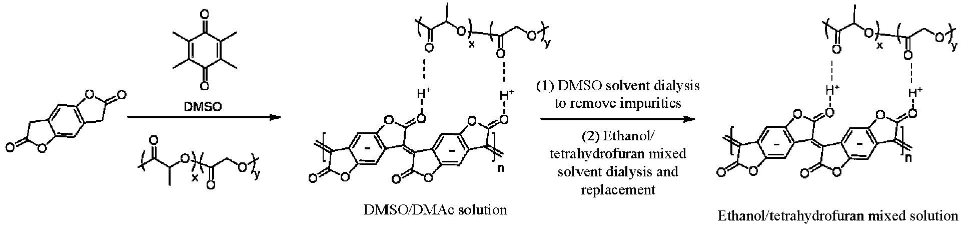

Benzo[1,2-b:4,5-b"]difuran-2,6(3H,7H)-dione (380.3 mg, 2 mmol), tetramethyl-1,4-benzoquinone (492.6 mg, 3 mmol), and PLGA were dissolved in DMSO (with a total volume of 40 mL) to obtain a solution, the solution was degassed under vacuum and purged with nitrogen for protection, and then stirred at 80°C for 4 h and cooled down to room temperature, the solution was then transferred into a pretreated dialysis bag (with a molecular weight cutoff of 10 kDa), and first dialyzed with a DMSO solution for three days, a solvent thereof was then replaced by a mixed solution of ethanol/tetrahydrofuran (ethanol : tetrahydrofuran = 1:4, v/v), the solution in the dialysis bag was collected and filtered with a polytetrafluoroethylene filter (0.45 µm) to obtain the electron-transport conductive ink processable in an ethanol solution, and the obtained solution had a solid content of 5.4 wt%.

The poly(lactic acid-co-glycolic acid) (PLGA) (with a copolymer ratio of 1 : 1, n/n, Mn of 40,000-70,000 Da) was purchased from Beijing HWRK Chemical Technology Co., Ltd.

### Example 4

An electron-transport conductive ink containing a benzodifurandione-based compound, which includes the following components by mass fraction:

| | |
|---|---|
| benzodifurandione-based compound | 0.6 wt% |
| poly(2-ethyl-2-oxazoline) | 2.0 wt% |
| isopropyl alcohol | balance. |

A preparation method for the electron-transport conductive ink containing a benzodifurandione-based compound is as follows:

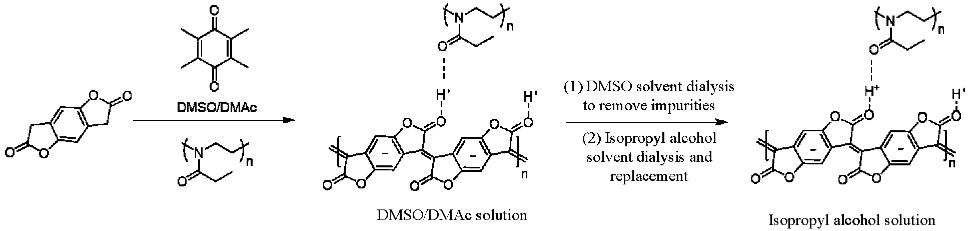

Benzo[1,2-b:4,5-b"]difuran-2,6(3H,7H)-dione (380.3 mg, 2 mmol), tetramethyl-1,4-benzoquinone (492.6 mg, 3 mmol), and poly(2-ethyl-2-oxazoline) were dissolved in a mixed solution of dimethyl sulfoxide (DMSO) and N,N-dimethylacetamide (DMAc) at a ratio of 1 : 1 (v/v) (with a total volume of 40 mL) to obtain a solution, the solution was degassed under vacuum and purged with nitrogen for protection, and then stirred at 80°C for 4 h and cooled down to room temperature, the solution was then transferred into a pretreated dialysis bag (with a molecular weight cutoff of 10 kDa), and first dialyzed with a DMSO solution for three days, a solvent thereof was then replaced through dialysis with an isopropyl alcohol solution, the solution in the dialysis bag was collected and filtered with an organic polytetrafluoroethylene filter (1 µm) to obtain the electron-transport conductive ink processable in an isopropyl alcohol solution, and the obtained solution had a solid content of 2.6 wt%.

The poly(2-ethyl-2-oxazoline) (with an Mn of 100000-250000 Da) was purchased from Macklin Reagents Co., Ltd.

### Example 5

An electron-transport conductive ink containing a benzodifurandione-based compound, which includes the following components by mass fraction:

| | |
|---|---|
| benzodifurandione-based compound | 0.65 wt% |
| poly(2-ethyl-2-oxazoline) | 4.15 wt% |
| isopropyl alcohol | balance. |

A preparation method for the electron-transport conductive ink containing a benzodifurandione-based compound is as follows:

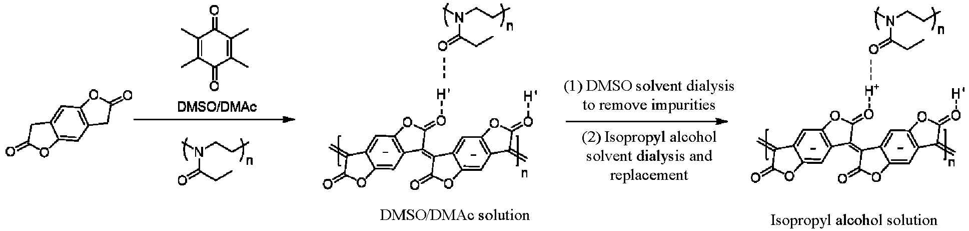

Benzo[1,2-b:4,5-b"]difuran-2,6(3H,7H)-dione (380.3 mg, 2 mmol), tetramethyl-1,4-benzoquinone (492.6 mg, 3 mmol), and poly(2-ethyl-2-oxazoline) were dissolved in a mixed solution of dimethyl sulfoxide (DMSO) and N,N-dimethylacetamide (DMAc) at a ratio of 1 : 1 (v/v) (with a total volume of 40 mL) to obtain a solution, the solution was degassed under vacuum and purged with nitrogen for protection, and then stirred at 80°C for 4 h and cooled down to room temperature, the solution was then transferred into a pretreated dialysis bag (with a molecular weight cutoff of 10 kDa), and first dialyzed with a DMSO solution for three days, a solvent thereof was then replaced through dialysis with an isopropyl alcohol solution, the solution in the dialysis bag was collected and filtered with an organic polytetrafluoroethylene filter(0.45 µm) to obtain the electron-transport conductive ink with different particle sizes processable in an isopropyl alcohol solution, and the obtained solution had a solid content of 4.8 wt%.

The poly(2-ethyl-2-oxazoline) (with an Mn of 100000-250000 Da) was purchased from Macklin Reagents Co., Ltd.

### Example 6

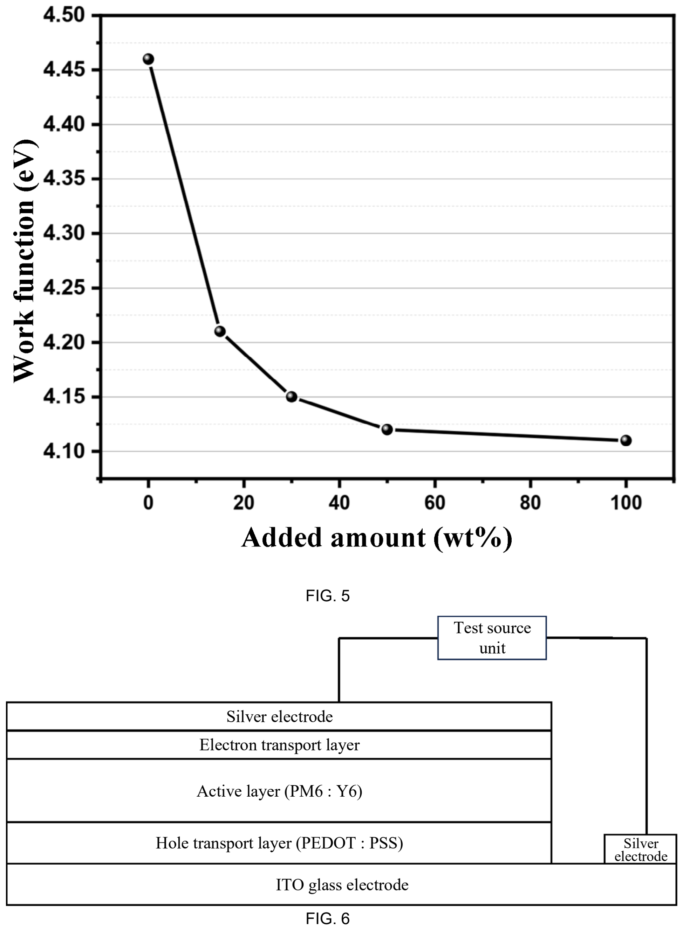

Based on the electron-transport conductive ink prepared in Example 5, an electron-transport conductive ink with low work function and ethanol-soluble processability was prepared by adding 3-(dodecyldimethylammonio)propanesulfonate, and the preparation process was as follows:
50 mL of the conductive ink prepared in Example 5 was taken, 720 mg of 3-(dodecyldimethylammonio)propanesulfonate (with an added amount of 35 wt% of the benzodifurandione-based compound) was added to obtain a mixed solution, and the mixed solution was stirred at room temperature for 30 min, then homogenized with a homogenizer for 10 min, and filtered with an organic polytetrafluoroethylene filter (0.45 µm) to obtain the electron-transport conductive ink with low work function and ethanol-soluble processability. The work function was 4.15 eV as being measured by a Kelvin probe. In addition, the work function could be further adjusted by controlling an amount of the 3-(dodecyldimethylammonio)propanesulfonate added (as shown in FIG. 5).

### Example 7

Based on the electron-transport conductive ink prepared in Example 6, an electron-transport conductive ink with UV resistance, low work function and ethanol-soluble processing was prepared by adding 2-(2'-hydroxy-5'-methylphenyl)benzotriazole, and the preparation process was as follows:
50 mL of the conductive ink prepared in Example 6 was taken, 120 mg of 2-(2'-hydroxy-5'-methylphenyl)benzotriazole (with an added amount of 5 wt% of the benzodifurandione-based compound) was added to obtain a mixed solution, and the mixed solution was stirred at room temperature for 30 min, then homogenized with a homogenizer for 10 min, and filtered with an organic polytetrafluoroethylene filter (0.45 µm) to obtain the electron-transport conductive ink with UV resistance, low work function, and ethanol-soluble processability.

### Comparative Example 1

No additional surfactant was added to this comparative example. The specific process was as follows:
benzo[1,2-b:4,5-b"]difuran-2,6(3H,7H)-dione (380.3 mg, 2 mmol), and tetramethyl-1,4-benzoquinone (492.6 mg, 3 mmol) were dissolved in a DMSO (with a total volume of 40 mL) solution, the solution was degassed under vacuum and purged with nitrogen for protection, and then stirred at 80°C for 6 h and cooled down to room temperature, the solution was then transferred into a pretreated dialysis bag (with a molecular weight cutoff of 10 kDa), and first dialyzed with a DMSO for three days, and a solvent thereof was then replaced through dialysis with an ethanol solution; and during dialysis, as the DMSO was replaced by ethanol, the prepared poly(benzodifurandione) precipitated as a solid in the dialysis bag, and a conductive polymer ink capable of being processed in an ethanol solution could not be obtained.

### Comparative Example 2

This comparative example used a low molecular weight F127 as a surfactant. The specific process was as follows:
benzo[1,2-b:4,5-b"]difuran-2,6(3H,7H)-dione (380.3 mg, 2 mmol), tetramethyl-1,4-benzoquinone (492.6 mg, 3 mmol), and polyether F127 (Mn = 5000 Da) were dissolved in a mixed solution of dimethyl sulfoxide (DMSO) and N,N-dimethylacetamide (DMAc) at a ratio of 1 : 1 (v/v) (with a total volume of 40 mL) to obtain a solution, the solution was degassed under vacuum and purged with nitrogen for protection, and then stirred at 80°C for 4 h and cooled down to room temperature, the solution was then transferred into a pretreated dialysis bag (with a molecular weight cutoff of 10 kDa), and first dialyzed with a DMSO solution for three days, a solvent thereof was then replaced through dialysis with an aqueous solution, the liquid in the dialysis bag was collected and filtered with a polyethersulfone aqueous phase filter (0.45 µm), but the prepared solution could not pass through the filter, therefore, an electron-transport conductive ink capable of being processed in an aqueous solution could not be obtained.

### Comparative Example 3

This comparative example used an equal mass of poly(diallyldimethylammonium chloride) as a surfactant to replace the polyether F127 in Example 1. The specific process was as follows:
benzo[1,2-b:4,5-b"]difuran-2,6(3H,7H)-dione (380.3 mg, 2 mmol), tetramethyl-1,4-benzoquinone (492.6 mg, 3 mmol), and poly(diallyldimethylammonium chloride) (Mn = 400,000-500,000 Da) were dissolved in a mixed solution of dimethyl sulfoxide (DMSO) and N,N-dimethylacetamide (DMAc) at a ratio of 1 : 1 (v/v) (with a total volume of 40 mL) to obtain a solution, the solution was degassed under vacuum and purged with nitrogen for protection, and then stirred at 80°C for 4 h and cooled down to room temperature, the solution was then transferred into a pretreated dialysis bag (with a molecular weight cutoff of 10 kDa), and first dialyzed with a DMSO for three days, and a solvent thereof was then replaced through dialysis with an aqueous solution to obtain a mixture; and during dialysis, the prepared mixture gradually precipitated as a solid in the dialysis bag, and a conductive polymer ink capable of being processed in an aqueous solution could not be obtained.

### Test Example 1

The liquids prepared in Examples 1-5 and the Comparative Example 2 were spin-coated into thin films, and electrical conductivities of the thin films were measured using a four-point probe method, to demonstrate the high conductivity characteristics of the water-soluble or alcohol-soluble conductive polymer inks provided in the present disclosure.

Test conditions were as follows: glass substrates were cleaned with deionized water, acetone, and isopropanol, respectively, and then dried in an oven at 60°C, and the corresponding liquids were spin-coated at 2000 rpm on the cleaned glass substrates to form thin films. A sheet resistance of each of the thin films was tested using a four-point probe instrument (HPS2663 from HelPass), and a thickness of each of the thin film was measured using a profilometer. The obtained films can be greatly adjusted by varying the type and amount of surfactant.

**Table 1: Test of conductivity of the conductive inks in Examples 1-5 and Comparative Example 2**

| Samples | Film thickness (nm) | Sheet resistance (Ω/□) | Conductivity (S/cm) |
|---|---|---|---|
| **Example 1** | 106 | 9.5×10⁷ | 9.9×10⁻⁴ |
| **Example 2** | 87 | 3.25×10⁶ | 0.035 |
| **Example 3** | 146 | 4.6×10⁵ | 0.15 |
| **Example 4** | 67 | 3.6×10³ | 41.46 |
| **Example 5** | 192 | 2.7×10⁵ | 0.19 |
| **Comparative Example 2** | Fail to form a film | / | / |

It can be seen from the above data that the obtained film can be greatly adjusted by varying the type and amount of surfactant.

### Test Example 2

The electron-transport conductive ink prepared in Example 4 was spin-coated into a film, different temperature differences were applied on both sides of the film to measure a Seebeck coefficient of the obtained material. Combined with the conductivity measured in Test Example 1, a power factor was calculated and reached 195 µW m-1 K-2, demonstrating the application of the water-soluble and alcohol-soluble electron-transport conductive ink provided in the present disclosure in an n-type thermoelectric device.

**Table 2 Thermoelectric performance parameters of the conductive ink in Example 4**

| Samples under test | Conductivity (S/cm) | Seebeck coefficient (µV/K) | Power factor (µW m⁻¹ K⁻²) |
|---|---|---|---|
| **Example 4** | 41.5 | -217 | 195.4 |

### Test Example 3

The electron-transport conductive ink with low work function and ethanol-soluble processability prepared in Example 6 was used to fabricate an electron transport layer of an organic solar cell, demonstrating the application of the conductive ink provided in the present disclosure as an electron transport material in an organic optoelectronic device. A structure of the organic solar cell was as follows: ITO (20 nm)/PEDOT : PSS (40 nm)/PM6:Y6 (1:1.5, m/m, 100 nm)/electron transport layer (10-150 nm)/silver electrode (80 nm). The structure was shown in FIG. 6. A preparation process of the device was as follows:
a glass substrate coated with indium tin oxide (ITO) was cleaned with deionized water, acetone, and isopropanol, respectively, and then dried in an oven at 60°C, A 40 nm-thick film of poly(3,4-ethylenedioxythiophene) : polystyrene sulfonic acid (PEDOT:PSS, CLEVIOS PVP Al 4083) was spin-coated on the cleaned ITO glass substrate and heated on a hot plate at 140°C in air for 15 min. An active-layer donor material (conjugated polymer PM6) and an acceptor material (Y6) were weighed in a clean bottle (1:1.5, m/m), transferred to a nitrogen-protected film-forming glove box (purchased from VAC), and then dissolved in a chloroform solvent containing 1 wt% of 1,8-diiodooctane, and a 100 nm-thick active layer film was spin-coated on the PEDOT:PSS film using a spin coater and a profilometer. The electron-transport conductive ink with low work function and ethanol-soluble processability prepared in Example 6 was diluted with isopropanol to solutions with different concentrations and spin-coated on the active layer to prepare an electron transport layer with a thickness of 10 nm-100 nm. The thin film was transferred to a vacuum deposition chamber connected to the glovebox, and a silver electrode (80 nm) was deposited through a shadow mask at approximately 10-7 Pa.

Before testing, the energy of simulated sunlight was calibrated to 100 mW/cm2 using a silicon photodiode calibrated by the National Renewable Energy Laboratory of the United State (NREL) and a KG5 filter. The energy conversion efficiency of the device was measured under a standard solar spectrum AM1.5 using a solar simulator (model 91192, Oriel, USA), and photocurrent and dark current carrier density-voltage (J-V) characteristics of the solar cell device were recorded using Keithley 2410 and Keithley 236 digital source meters, respectively.

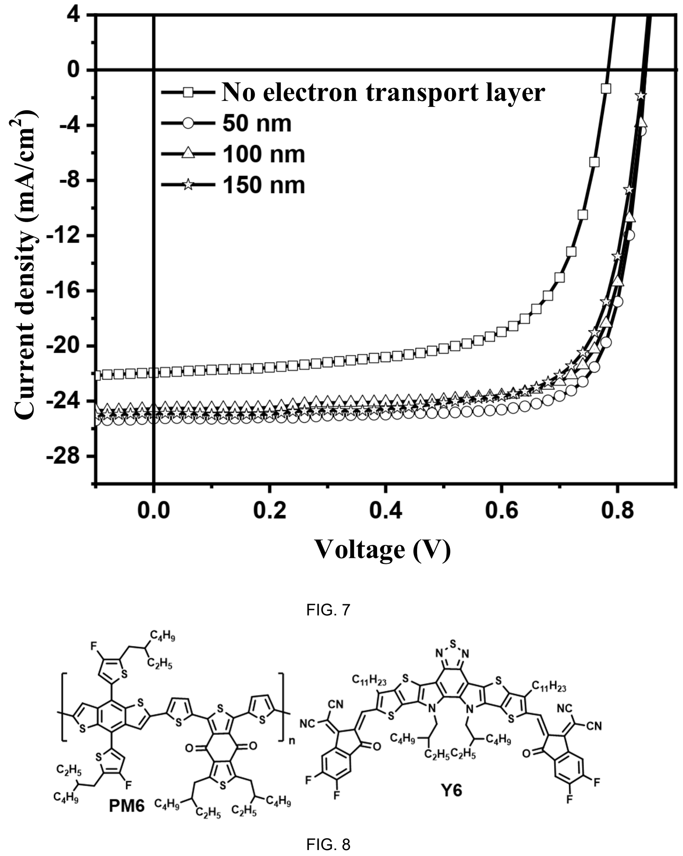

This example further provides a comparative sample without the electron-transport conductive ink prepared in the present disclosure, that is, without an electron transport layer, of the present disclosure. A relationship between the current density and voltage of the device under illumination is shown in FIG. 7, and specific device efficiency is shown in Table 3.

FIG. 8 shows a chemical structure of an electron donor material PM6 and an electron acceptor material Y6 of an anode buffer material in an example.

**Table 3 Performance of organic solar cells with different thicknesses of electron transport layers prepared using the conductive ink in Example 6**

| Thickness of the electron transport layer (nm) | Open-circuit voltage (V) | Short-circuit current (mA/cm2) | Filling factor (%) | Conversion efficiency (%) |
|---|---|---|---|---|
| N/A | 0.784 | 21.95 | 67.10 | 11.54 |
| 50 | 0.848 | 25.27 | 78.10 | 16.73 |
| 100 | 0.848 | 24.56 | 76.46 | 15.92 |
| 150 | 0.844 | 24.90 | 73.72 | 15.49 |

It can be seen from the above data that the electron-transport conductive ink prepared in the present disclosure can be used as an electron transport layer, significantly improving the device performance and exhibiting excellent thickness insensitivity.

### Test Example 4

The electron-transport conductive ink processable in an alcohol solution prepared in Example 4 was spin-coated into a film and annealed at different temperatures under an inert atmosphere for 30 min, and the conductivity of the film was then measured, demonstrating that the film formed by the conductive ink in the present disclosure exhibited excellent thermal stability and could be further crystallized after heating, such that different conductivity can be achieved. Test results were shown in Table 4.

**Table 4 Conductivity of the film formed by conductive ink in Example 4 after spin-coating and annealing**

| Annealing temperature (°C) | Conductivity (S/cm) |
|---|---|
| 150 | 284 ± 26 |
| 200 | 512 ± 37 |
| 250 | 780 ± 60 |
| 300 | 1260 ± 97 |

For those skilled in the art, it is apparent that the present disclosure is not limited to details of the exemplary embodiments, and the present disclosure can be implemented in other specific forms without departing from the spirit or basic features of the present disclosure. Therefore, the embodiments should be regarded as illustrative and non-restrictive no matter from which point of view. The scope of the present disclosure is defined by the appended claims rather than the above specification, and therefore, it is intended that all changes which fall within the meaning and scope of equivalency of the claims are embraced in the present disclosure.

In addition, it should be understood that although the description is described according to implementations, each implementation does not include only one independent technical solution, the description is for clarity only, and those skilled in the art should take the description as a whole, the technical solutions in the various embodiments may be appropriately combined to form other implementations understandable by those skilled in the art.

## Claims

1. An electron-transport conductive ink containing a benzodifurandione-based compound, wherein the electron-transport conductive ink containing a benzodifurandione-based compound comprises a benzodifurandione-based compound, a specific surfactant, and a solvent; wherein
the benzodifurandione-based compound has the following structural unit: 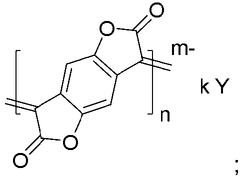
wherein m, n and k are positive integers;
Y is a counterion in the structure, and is selected from one of an organic cation or an inorganic cation;
the specific surfactant is selected from an anionic surfactant, a cationic surfactant, a nonionic surfactants, or an amphoteric surfactant; and
the solvent is selected from one or more of a water solvent and an alcohol solvent.

2. The electron-transport conductive ink containing a benzodifurandione-based compound of claim 1, wherein the electron-transport conductive ink comprises the following components by mass fraction:
| | |
|---|---|
| a benzodifurandione-based compound | 0.2-1 wt% |
| a specific surfactant | 1-6 wt% |
| a solvent | balance. |

3. The electron-transport conductive ink containing a benzodifurandione-based compound of claim 1, wherein the specific surfactant is selected from surfactants capable of forming a hydrogen bond with the benzodifurandione-based compound.

4. The electron-transport conductive ink containing a benzodifurandione-based compound of claim 1, wherein the specific surfactant is a polymer, and has one or more of an ether group, an amide group, an ester group, or a carbonyl group.

5. The electron-transport conductive ink containing a benzodifurandione-based compound of claim 4, wherein the specific surfactant is selected from one or more of a polyether derivative, a polylactic acid derivative, a polyacrylic acid derivative, a polyacrylamide derivative, a polyamide derivative, an imidazole-based polymer derivative, a thiazole-based polymer derivative, an oxazole-based polymer derivative, and any binary or multi-polymer of any of the above optional objects or a derivative thereof.

6. The electron-transport conductive ink containing a benzodifurandione-based compound of claim 1, wherein the electron-transport conductive ink containing a benzodifurandione-based compound comprises a solid composition and a liquid composition; wherein
the solid composition accounts for 0.1-20 wt% of the electron-transport conductive ink containing a benzodifurandione-based compound.

7. The electron-transport conductive ink containing a benzodifurandione-based compound of claim 6, wherein the liquid composition comprises one or more of a UV stabilizer, a crosslinking agent, a work function modifier, a preservative, a thickener, and a co-solvent; and
the co-solvent is selected from one or more of a nitrile solvent, an ether solvent, an ester solvent, a sulfoxide solvent, a ketone solvent, and an amide solvent.

8. The electron-transport conductive ink containing a benzodifurandione-based compound of claim 1, wherein a number-average molecular weight of the specific surfactant is 5 kDa-500 kDa.

9. A preparation method for the electron-transport conductive ink containing a benzodifurandione-based compound of claim 1, wherein the solvent is used to replace an original polar solvent after the preparation of the benzodifurandione-based compound is completed.

10. Application of the electron-transport conductive ink containing a benzodifurandione-based compound of claim 1 in the optoelectronic field.
